# EUROPÄISCHE PATENTANMELDUNG

(11) **EP 2 334 105 A1**
(43) Veröffentlichungstag der Anmeldung: **15.06.2011**
(21) Anmeldenummer: 09815640.9
(22) Anmeldetag: 18.09.2009
(51) Int. Cl.: H04W 4/04, H04H 20/62

(54) **VERFAHREN ZUM AUSTAUSCHEN VON SPRACHNACHRICHTEN ZWISCHEN EINEM FAHRER UND EINEM PASSAGIER**

(30) Priorität: 26.09.2008 EA 200802269
(71) Anmelder: Ivanchikov, Aleksey Anatolyevich, Gomel 246020 (BY)
(72) Erfinder: Ivanchikov, Aleksey Anatolyevich, Gomel 246020 (BY)
(74) Vertreter: Schütte, Hartmut
(86) Internationale Anmeldenummer: PCT/EA2009/000006
(87) Internationale Veröffentlichungsnummer: WO 2010/034316

(57) **Zusammenfassung**

Die Erfindung gehört zu Verbindungsmitteln zwischen dem Kraftfahrer und den Kraftfahrzeugbenutzern, insbesondere zur Verbindungsaufnahme für sich im Gleichlauf befindliche Kraftfahrer und Kraftfahrzeugbenutzer.

Die Aufgabe dieser Erfindung ist die Sprachverständigung zwischen dem Kraftfahrer und Kraftfahrzeug-Benutzer unter Beachtung gegenseitiger Lage, gegenseitiger Bewegungsrichtung, sowie anderer Antriebe des Kraftfahrers und des Benutzers zum Austausch der Information zwecks der Mitfahrt im Beförderungsweg.

Die gestellte Aufgabe wird dadurch erfüllt, dass der Kraftfahrer mit seinen Koordinaten angemeldet wird, die Mitteilungen von den Benutzern empfangen werden, dabei werden mit Aufnahme und Eintragung der Sprachmeldung des Benutzers als Eigenschaft der Meldung auch Koordinaten des Benutzers gespeichert; der Kraftfahrer empfängt selbständig die aus der für ihn vorbereiteten Liste Meldungen, dabei wird die Übertragungsliste unter Verwendung der Koordinaten von Benutzer und Kraftfahrer mit Rücksicht auf gegenseitige Erreichbarkeitszone zusammengefasst und die Sprachverständigung zwischen dem Kraftfahrer und von ihm aus der Übertragungsliste gewählten Benutzer hergestellt.

Es gibt auch weitere Unterschiede vom Prototyp.

Das Verfahren ermöglicht Aufnahme, Ansammeln und Übertragung von Sprachmeldungen der individuellen Liste. Das Verfahren ermöglicht automatische Auswahlverbindung zwischen dem Kraftfahrer und dem erreichbaren Benutzer. Das Verfahren erlaubt die Zeit des Benutzers und des Kraftfahrers zu sparen und die Kosten für Beförderung der Benutzer zu senken.

## Beschreibung

Die Erfindung gehört zu Verbindungsmitteln zwischen dem Kraftfahrer und den Kraftfahrzeugbenutzern, insbesondere zur Verbindungsaufnahme für sich im Gleichlauf befindliche Kraftfahrer und Benutzer.

Es sind Systeme zur Erfassung und Übertragung von Nachrichten über Kraftfahrzeuge bekannt, die aus im Kraftfahrzeug eingebauten Navigationssignalempfänger (GPS), Steuereinheit, Speichereinheiten mit Angaben über das Kraftfahrzeug, Aufnahme- und Sendereinheit zur Übertragung und Aufnahme der Information von der Dispatcherzentrale bestehen. Die bekannten Systeme haben in der Dispatcherzentrale Aufnahme- und Sendereinheit, Einheit zur Bereitstellung der Nachrichten, Datenbank und Anzeigeeinheit [1, 2, 3].

Der Nachteil der bekannten Verfahren und Systeme ist unbedingter Einsatz von Dispatchern. Jeder Auftrag kommt zuerst zum Dispatcher, der diese in bestimmter Weise bearbeitet und an den Kraftfahrer übermittelt. Gerade er begleitet den Auftrag und ist ein Vermittler in jeder Beziehung zwischen dem Kraftfahrer und dem Benutzer.

Es ist auch ein System [4] zur Steuerung und Kontrolle der Arbeit von Kraftfahrzeugen bekannt, das für jedes Kraftfahrzeug jeweils eine Vorrichtung bestehend aus Nachrichtenformer mit angeschlossenen GPS-Empfänger, Gleitzeitzähler, Zustandskode-Former vorsieht; der Ausgang des Nachrichtenformers ist über eine Aufnahme- und Sendereinheit mit der Aufnahme- und Sendereinheit in der Dispatcherzentrale verbunden, die Aufnahme- und Sendereinheit der Dispatcherzentrale ist über eine Parameterauswahl-Einheit mit einem Datenspeicher verbunden, dieser dient zur Speicherung von laufenden Daten über die Parameter aller funktionierenden Kraftfahrzeuge. In dem bekannten System ist eine Einheit zur akustischen Verbindung zwischen dem Dispatcher und den Kraftfahrern vorgesehen.

Der Nachteil des bekannten Systems und Verfahrens ist ebenso Vorhandensein zwischen dem Kraftfahrer und dem Benutzer eines Zwischenglieds - der Dispatcherzentrale, die die Verbindungszeit zwischen dem Fahrer und dem Benutzer wesentlich verlängert.

Am nächsten zu der anzumeldenden technischen Lösung steht ein Verfahren der Verbreitung von Werbemitteilungen unter Beachtung der Lage des Waren- und Leistungsverbrauchers, System zu dessen Realisierung [5]. Das bekannte Verfahren schließt Folgendes mit ein: Registrierung im System für automatische Verbreitung der Werbemitteilungen der Benutzer von Mobilfunkgeräten und Werbetreibenden mit Bildung von entsprechenden Klassifikationsmerkmalen, Bildung von Werbeinformation mit Angabe von Anzeigeparametern, Bereitstellung der Werbeinformation, Übertragung und Anzeige der aus der gespeicherten Information ausgewählten Werbeinformation für den Benutzer des Mobilfunkgerätes bei der Übertragung der Anfrage zur Verbindung mit dem Mobilfunkgerät des Empfängers; während dieser Anfrage wird die aktuelle Lage des Mobilfunkgerät-Benutzers ermittelt und entsprechende Werbemitteilung mit Klassifikationsmerkmalen der Mobilfunkgerät-Benutzer unter Beachtung der aktuellen Lage des Mobilfunkgerät-Benutzers gebildet; die genannte Mitteilung wird in die Versandsteuerung übergegeben; als Antwort auf den Empfang der genannten Mitteilung für einen bestimmten Benutzer wird ein Werbepaket bestehend mindestens aus einer Werbemitteilung unter Beachtung der Klassifikationsmerkmalen dieses Benutzers und der aktuellen Lage des Mobilfunkgerätes gebildet.

Das bekannte Verfahren ermöglicht die automatische Ortung des Anrufenden und automatische Verbindung mit dem Werbemitteilungen versendenden Server, dabei wird die Versandliste unter Beachtung der Lage des Benutzers gebildet.

Der Nachteil des bekannten Verfahrens ist die Nutzung ausschließlich der Nicht-Sprachmeldungen, es ist keine nachfolgende Sprachverständigung mit dem Benutzer vorgesehen.

Die Aufgabe dieser Erfindung ist Erfassung, Bearbeitung und Übertragung der Sprachmeldungen der Benutzer, die Beförderungsleistungen brauchen, sowie eine Möglichkeit der Sprachverständigung unter Beachtung der Lage vom Kraftfahrer und Kraftfahrzeug-Benutzer zum Austausch der zusätzlichen Information zwecks der Mitfahrt im Beförderungsweg.

Die gestellte Aufgabe wird dadurch erfüllt, dass der Kraftfahrer mit seinen Koordinaten im bekannten Verfahren des Austausches der Sprachmeldungen zwischen dem Kraftfahrer und dem Kraftfahrzeug-Benutzer mit Hilfe der Mobilfunk, die in sich Aufnahme der Sprachmeldungen vom Benutzer, Speicherung dieser Meldungen und deren Übertragung an den Kraftfahrer, sowie Sprachverständigung zwischen dem Kraftfahrer und dem Benutzer laut der Erfindung einschließt, angemeldet wird; die Mitteilungen werden von den Benutzern empfangen, dabei werden mit Aufnahme und Eintragung der Sprachmeldung des Benutzers als Eigenschaft der Meldung auch Koordinaten des Benutzers gespeichert; der Kraftfahrer empfängt selbständig die aus der für ihn vorbereiteten Liste Meldungen, dabei wird diese Liste unter Verwendung der Koordinaten von Benutzer und Kraftfahrer mit Rücksicht auf gegenseitige Erreichbarkeitszone zusammengefasst und die Sprachverständigung zwischen dem Kraftfahrer und von ihm aus der Liste gewählten Benutzer hergestellt.

Die gestellte Aufgabe wird auch dadurch erfüllt, dass die Übertragungsliste für den Kraftfahrer für die Zeit der Aufnahme der Meldungen vom Fahrer gebildet wird, nach Beenden der Aufnahme der Mitteilungen wird die Liste gelöscht.

Die gestellte Aufgabe wird auch dadurch erfüllt, dass der Benutzer seine Meldung zu jeder Zeit löschen kann.

Die gestellte Aufgabe wird auch dadurch erfüllt, dass die Meldung des Benutzers nach der Änderung der Lage des Benutzers oder nach eingestelltem Zeitintervall gelöscht wird.

Die gestellte Aufgabe wird auch dadurch erfüllt, dass die Lage des Benutzers und/oder des Kraftfahrers unter Einsatz der Satellitennavigation ermittelt wird.

Die gestellte Aufgabe wird auch dadurch erfüllt, dass die Lage des Benutzers und/oder des Kraftfahrers unter Einsatz der Ortung in den Mobilfunknetzen ermittelt wird.

Die gestellte Aufgabe wird auch dadurch erfüllt, dass die Lage des Benutzers und/oder des Kraftfahrers unter Einsatz der Landkarte ermittelt wird, dabei wird die Meldung per Internet gesendet.

Die gestellte Aufgabe wird auch dadurch erfüllt, dass die Lage des Kraftfahrers und/oder des Benutzers in eingestellten Perioden ermittelt wird.

Die gestellte Aufgabe wird auch dadurch erfüllt, dass die Erreichbarkeitszone unter Beachtung der Fahrtrichtung des Kraftfahrers ermittelt.

Die gestellte Aufgabe wird auch dadurch erfüllt, dass die Verkehrslinie des Kraftfahrers unter Verwendung von angesammelten statistischen Angaben der Verkehrslinie und/oder unter Beachtung der Automobilkarte prognostiziert.

Die gestellte Aufgabe wird auch dadurch erfüllt, dass die Meldungen von Benutzern mit Vorgabe des Beförderungswegs empfangen werden.

Solche Ausführung der Erfindung ermöglicht eine schnelle automatische Sprachverständigung zwischen dem Kraftfahrer und den im Gleichlauf befindlichen erreichbaren Benutzern.

Das Verfahren wird folgenderweise realisiert:

Der Anbieter stellt zwei Sondernummer im Mobilfunknetz bereit: eine zur Eintragung der Meldungen von den Benutzern, die zweite zur Übertragung der Meldungen an die Kraftfahrer. Der Leistungsempfänger ist ein Mobilfunkteilnehmer, der eine solcher Nummer anruft. Insofern zum Funktionieren dieser Leistung die Angaben der Lage vom Benutzer und Kraftfahrer erforderlich ist, so ist ihre Zustimmung für Ermittlung dieser Information notwendig. Bei der ersten Anmeldung für die Leistung hören die Benutzer die Geheimhaltungsvereinbarung durch und ihre Einwilligung zur Eintragung und Ausnutzung der Angaben über ihre Lage im Rahmen der Leistung geben.

Der Benutzer ruft die vom Mobilfunkbetreiber für die Benutzer bereitgestellte Nummer an. Die Lage des Benutzers wird mit Empfang der Sprachmeldung ermittelt und gelingt in die Datenbank der Sprachmeldungen. Dabei werden neben den Sprachmeldungen auch Angaben über die Lage des Benutzers und seine Telefonnummer in der Datenbank gespeichert. Alle Meldungen der Benutzer werden mit anderen Attributen bis Bedarf an bestimmte Leistung noch besteht aufbewahrt.

Die Leistung kann auch die Prüfung der Lage in eingestellten Perioden vorsehen. Die Aktualität der Meldung jedes Benutzers kann nach der zeitlichen Alterung, nach der Positionsänderung des Benutzers um einen vorgegebenen Wert überwacht werden. Die Meldung kann auch vom Benutzer durch Befehle während des Gesprächs mit dem Kraftfahrer oder durch Versand der Meldungen oder durch Anruf aufgehoben werden. Andere bekannte Verfahren der Aufhebung einer Meldung sind auch möglich.

Der Kraftfahrer ruft die vom Mobilfunkbetreiber für die Kraftfahrer bereitgestellte Nummer an und hört in Echtzeit die eingegangenen Sprachmeldungen der erreichbaren Benutzer durch, die individuell für ihn ausgewählt und fortlaufend übertragen werden (im Folgenden Übertragungsliste genannt). Die Lage des Kraftfahrers kann sowie einmalig beim Anruf, als auch in vorgegebenen Perioden während des Abhörens der für ihn vorbereiteten Übertragungsliste ermittelt werden. Periodische Ermittlung der Nummer ist für die Planung der Verkehrslinie und Korrektur der Übertragungsliste erforderlich.

Die Erreichberkeitszone kann durch den Leistungsanbieter anhand der gegenseitigen Lage des Kraftfahrers und Benutzers bestimmt werden. In dem einfachsten Fall ist das ein Kreis mit dem vorgegebenen Radius um die aktuelle Lage des Kraftfahrers. Zusätzlich können auch die Fahrtrichtung des Fahrers als Richtungsvektor aus zwei letzten Punkten der Lage des Kraftfahrers, sowie aus angesammelten statistischen Angaben der Verkehrslinie für diesen Kraftfahrer und Automobilkarte berücksichtigt werden. Dabei bewegt sich die Erreichbarkeitszone in Bezug auf aktuelle Lage des Kraftfahrers nach vorne in der voraussichtlichen Verkehrslinie des Kraftfahrers. Für Überlandverkehr kann die Erreichbarkeitszone größer als für Innenstadtverkehr sein. Die Größe der Erreichbarkeitszone kann vom Kraftfahrer individuell eingestellt werden.

Die individuelle Übertragungsliste wird von dem Mobilfunkbetreiber mit Hilfe von entsprechender Ausrüstung und Software vorbereitet. Die Übertragungsliste besteht aus Meldungen der Benutzer, die sich in Erreichbarkeitszone des Kraftfahrers (für den die Liste vorbereitet worden ist) zum vorgegebenen Zeitpunkt befinden. Jede Mitteilung des Benutzers wird in der Übertragungsliste bis Alterung oder Entfernung aufbewahrt. In die Übertragungsliste werden die Mitteilungen des Benutzers hinzugefügt, die momentan in die Erreichbarkeitszone gelangen. Die Reihenfolge des Abhörens wird chronologisch oder willkürlich oder je nach der Entfernung vom Kraftfahrer gebildet. Nach dem Abhören wird die Meldung als übermittelt markiert. Die nicht mehr aktuelle Meldungen werden aus der Übertragungsliste gelöscht oder als nicht aktuell in dem Fall markiert, wenn sie schon durchgehört worden sind und bei erneutem Abhören vom Kraftfahrer mit entsprechender akustischer Marke versehen werden.

Beim Abhören der individuellen Übertragungsliste vom Kraftfahrer macht er die Wahl zugunsten des oder jenes Benutzers in Abhängigkeit von der gegenseitigen Verkehrslinie, persönlichen Bevorzugung u.a.

Das Service sichert die Navigation des Kraftfahrers nach den Meldungen der Benutzer aus der Übertragungsliste, sofortige Vermittlung zwischen dem Kraftfahrer und dem Benutzer zum nachfolgenden Ferngespräch. Diese Funktionen können mittels der Steuertasten des Mobiltelefons realisiert werden.

Zur Bequemlichkeit der Benutzer kann die Eingabe der Anzeigen auch per Internet erfolgen. Dabei kommen bei der Eingabe der Anzeigen für Ermittlung der Lage die Landkarten zum Einsatz, die im Internet weit verbreitet sind. Das können YandexMap, GoogleEarth oder andere verfügbare Karten sein. Dieses Verfahren erlaubt den Benutzern und Kraftfahrern genauer ihre Lage angeben, sowie die Anzeigen mit Verzögerung der Übertragung eingeben und abhören um dabei Geld zu sparen. Dieses Verfahren ist eher bequem für geplante Reisen.

Im Unterschied zu den traditionellen Systemen mit Einsatz des Dispatchers oder mit formalisierten Ausgabe der Benutzer unter Verwendung von Katalogen der Bestimmungsorte erfolgt der Abgang der nicht passenden Benutzer und die Auswahl der Mitfahrer etappenweise wie folgt:

In der ersten Etappe erfolgt die automatische Auswahl der Benutzer, die sich in der beschriebenen Erreichbarkeitszone befinden. Für jeden Kraftfahrer wird individuelle Übertragungsliste gebildet, die aus einer Reihenfolge von Sprachmeldungen der ausgewählten Benutzer besteht.

Die nachfolgende Wahl der vorgewählten Benutzer erfolgt von jedem Kraftfahrer, indem er seine individuelle Übertragungsliste abhört. Dabei berücksichtigt er seine Verkehrslinie und die der Benutzer, Persönlichkeit der Benutzer, sowie andere beliebige und nur ihm bekannte Merkmale.

Den Endbeschluss über die Leistung für den bestimmten Benutzer wird vom Kraftfahrer und Benutzer gemeinsam während des Gesprächs gefasst; das Gespräch beginnt der Kraftfahrer, indem er sofort und zu jeder Zeit während des Abhörens der laufenden Meldung mit Hilfe des Mobilfunks anrufen kann.

Das Verfahren ermöglicht Aufnahme, Ansammeln und Übertragung von Sprachmeldungen der individuellen Liste. Das Verfahren ermöglicht automatische Auswahlverbindung zwischen dem Kraftfahrer und dem erreichbaren Benutzer. Das Verfahren erlaubt die Zeit des Benutzers und des Kraftfahrers zu sparen und die Kosten für Beförderung der Benutzer zu senken.

Vom Anmelder wurde Dokumentation vorbereitet und Elemente des Verfahrens während des Versuchsbetriebs geprüft.

Die bei der Prüfung berücksichtigten Informationsquellen:
1. Internationale Anmeldung WO98/11513, internationale Patentklassifikation G 07 C 5/00 veröffentlicht am 19.03.1998.
2. Patent der Russischen Föderation 2113013, internationale Patentklassifikation G 08 G 1/01, veröffentlicht am 10.06.1998.
3. Patent der Russischen Föderation 2143745, internationale Patentklassifikation G 08 C 19/12, veröffentlicht am 27.11.1999.
4. Patent der Russischen Föderation 2173885, internationale Patentklassifikation G 07 C 5/00, veröffentlicht am 20.09.2001.
5. Anmeldung der Russischen Föderation 2007107484, internationale Patentklassifikation H04Q 7/00 veröffentlicht am 10.09.2008 - Prototyp.

## Patentansprüche

1. Das ist das Verfahren des Austausches der Sprachmeldungen zwischen dem Kraftfahrer und dem Kraftfahrzeug-Benutzer mit Hilfe der Mobilfunk, die in sich Aufnahme der Sprachmeldungen vom Benutzer, Speicherung dieser Meldungen und deren Übertragung an den Kraftfahrer, sowie Sprachverständigung zwischen dem Kraftfahrer und dem Benutzer einschließt; das Verfahren ***unterscheidet sich*** dadurch, dass der Kraftfahrer mit seinen Koordinaten angemeldet wird, die Mitteilungen von den Benutzern empfangen werden, dabei werden mit Aufnahme und Eintragung der Sprachmeldung des Benutzers als Eigenschaft der Meldung auch Koordinaten des Benutzers gespeichert; der Kraftfahrer empfängt selbständig die aus der für ihn vorbereiteten Liste Meldungen, dabei wird diese Liste unter Verwendung der Koordinaten von Benutzer und Kraftfahrer mit Rücksicht auf gegenseitige Erreichbarkeitszone zusammengefasst und die Sprachverständigung zwischen dem Kraftfahrer und von ihm aus der Liste gewählten Benutzer hergestellt.

2. Das Verfahren laut der Ziff. 1 ***unterscheidet sich*** dadurch, dass die Übertragungsliste für den Kraftfahrer für die Zeit der Aufnahme der Meldungen vom Fahrer gebildet wird, nach Beenden der Aufnahme der Mitteilungen wird die Liste gelöscht.

3. Das Verfahren laut der Ziff. 1 ***unterscheidet* s*****ich*** dadurch, dass der Benutzer seine Meldung zu jeder Zeit löschen kann.

4. Das Verfahren laut der Ziff. 1 ***unters cheidet sich*** dadurch, dass die Meldung des Benutzers nach der Änderung der Lage des Benutzers oder nach eingestelltem Zeitintervall gelöscht wird.

5. Das Verfahren laut der Ziff. 1 ***unterscheidet sich*** dadurch, dass die Lage des Benutzers und/oder des Kraftfahrers unter Einsatz der Satellitennavigation ermittelt wird.

6. Das Verfahren laut der Ziff. 1 ***unterscheidet sich*** dadurch, dass die Lage des Benutzers und/oder des Kraftfahrers unter Einsatz der Ortung in den Mobilfunknetzen ermittelt wird.

7. Das Verfahren laut der Ziff. 1 ***unterscheidet sich*** dadurch, dass die Lage des Benutzers und/oder des Kraftfahrers unter Einsatz der Landkarte ermittelt wird, dabei wird die Meldung per Internet gesendet.

8. Das Verfahren laut der Ziff. 5 oder Ziff. 6 ***unterscheidet sich*** dadurch, dass die Lage des Kraftfahrers und/oder des Benutzers in eingestellten Perioden ermittelt wird.

9. Das Verfahren laut der Ziff. 1 ***unterscheidet sich*** dadurch, dass die Erreichbarkeitszone unter Beachtung der Fahrtrichtung des Kraftfahrers ermittelt.

10. Das Verfahren laut der Ziff. 9 ***unterscheidet sich*** dadurch, dass die Verkehrslinie des Kraftfahrers unter Verwendung von angesammelten statistischen Angaben der Verkehrslinie und/oder unter Beachtung der Automobilkarte prognostiziert.

11. Das Verfahren laut der Ziff. 1 ***unterscheidet sich*** dadurch, dass die Meldungen von Benutzern mit Vorgabe des Beförderungswegs empfangen werden.
